# EUROPÄISCHE PATENTSCHRIFT

(11) **EP 3 093 978 B1**
(45) Veröffentlichungstag und Bekanntmachung des Hinweises auf die Patenterteilung: **30.06.2021**
(21) Anmeldenummer: 15167371.2
(22) Anmeldetag: 12.05.2015
(51) Int. Cl.: H02M 7/5387

(54) **VERFAHREN ZUM BETRIEB EINES PULSSTROMRICHTERS, PULSSTROMRICHTER UND LEISTUNGSHALBLEITERMODUL FÜR EINEN SOLCHEN**
METHOD OF OPERATING AN INVERTER, INVERTER AND POWER SEMICONDUCTOR MODULE FOR SUCH AN INVERTER
MÉTHODE D'OPÉRATION D'UN ONDULEUR, ONDULEUR ET MODULE DE SEMICONDUCTEURS DE PUISSANCE POUR LEDIT ONDULEUR

(43) Veröffentlichungstag der Anmeldung: 16.11.2016
(73) Patentinhaber: Siemens Aktiengesellschaft, 80333 München (DE)
(72) Erfinder: Weis, Benno, 91334 Hemhofen (DE)

(56) Entgegenhaltungen:
- EP-A1- 2 237 402
- WO-A1-2014/024596
- DE-A1-102008 036 485
- JP-A- 2011 036 020
- US-A1- 2008 205 100

## Beschreibung

Die Erfindung bezieht sich auf einen Pulsstromrichter sowie auf ein Verfahren zum Betrieb eines solchen. Die Erfindung bezieht sich des Weiteren auf ein Leistungshalbleitermodul für einen Pulsstromrichter.

Pulsstromrichter werden insbesondere in einer Umrichterschaltung eingesetzt, beispielsweise zur Umwandlung eines Netzstroms in einen mehrphasigen Steuerstrom für einen Elektromotor. In einer solchen Umrichterschaltung werden typischerweise ein als Gleichrichter arbeitender Pulsstromrichter mit einem als Wechselrichter arbeitenden Pulsstromrichter über einen Zwischenkreis zusammengeschaltet. Im Fall der vorstehend beschriebenen Motoransteuerung sind dabei der Gleichrichter netzseitig und der Wechselrichter motorseitig angeordnet.

Pulsstromrichter der vorstehend beschriebenen Art weisen üblicherweise mehrere parallel zueinander in den Zwischenkreis geschaltete Halbbrücken auf, in denen jeweils in Serie zwei Halbleiterschalter angeordnet sind, wobei jedem Halbleiterschalter jeweils eine parallele Freilaufdiode zugeordnet ist. Zwischen den beiden Halbleiterschaltern einer jeden Halbbrücke des Pulsstromrichters ist hierbei im Falle des vorstehend beschriebenen Gleichrichters eine Phase des Stromnetzes bzw. im Falle des Wechselrichters eine Phase des anzusteuernden Motors angeklemmt.

Bei Verwendung von unipolaren Halbleiterschaltern, beispielsweise Leistungs-MOSFETs können vorteilhafterweise separate Leistungs-Freilaufdioden entfallen, zumal diese Halbleiterschalter baubedingt jeweils mit einer auch (als Body-Diode bezeichneten) internen Freilaufdiode ausgestattet sind. Diese MOSFET-internen Freilaufdioden haben jedoch - vor allem bei Bauelementen aus dem Halbleitermaterial Silizium-Carbit (SiC) - eine hohe Vorwärtsspannung, die bei hohen Stromstärken zu hohen Verlusten und - hierdurch bedingt - zu einer Überhitzung des Bauelements führen kann. Um eine solche Überhitzung zu vermeiden, ist es erwünscht, die Verluste im Betrieb eines Pulsstromrichters möglichst gering zu halten, wobei gleichzeitig die erforderliche Überdimensionierung der Leistungshalbleiter des Pulsstromrichters möglichst klein gehalten werden soll.

In DE 10 2008 036 485 A1 wird vorgeschlagen, durch eine dem Pulsstromrichter zugeordnete Steuereinheit den Bestromungszustand der Freilaufdioden zu erfassen, und die Halbleiterschalter des Pulsstromrichters immer dann aufzusteuern, d.h. elektrisch leitend zu schalten, wenn nach einer Netzunterbrechung ein Ladestrom durch die diesem Halbleiterschalter zugeordnete Freilaufdiode fließt. Hierdurch wird der drohenden Zerstörung der Leistungshalbleiter durch die nach Netzunterbrechung typischerweise überhohen Ladeströme vorgebeugt. Dieses Verfahren ist allerdings nur im Lademodus der Umrichterschaltung, und nur auf den netzseitigen Pulsstromrichter einer solchen Umrichterschaltung anwendbar. Gefährliche Überströme in Motorwechselrichtern, die zum Beispiel durch Zwischenkreiskurzschlüsse vom Motor erzeugt werden, können somit mit dem bekannten Verfahren nicht beherrscht werden. Zudem ist es bei der Umsetzung des bekannten Verfahrens in die Praxis regelmäßig erforderlich, die im Rahmen des Verfahrens erhobenen Messgrößen über potentialgetrennte Signalstrecken an die Steuereinheit zu übertragen, was die Umsetzung des bekannten Verfahrens aufwändig macht.

Weiterer relevanter Stand der Technik für die vorliegende Erfindung ist außerdem WO2014024596 A1, JP2011036020, US2008205100 A1 und EP2237402 A1. Diese Druckschriften behandeln ebenfalls die Thematik von Pulstromrichtern mit aktiv schaltbaren Halbleiterschaltern.

Der Erfindung liegt die Aufgabe zugrunde, die im Betrieb eines Pulsstromrichters auftretenden Verluste bei möglichst einfachem und unaufwändig realisierbarem Aufbau des Pulsstromrichters zu reduzieren.

Bezüglich eines Verfahrens zum Betrieb eines Pulsstromrichters wird diese Aufgabe erfindungsgemäß gelöst durch die Merkmale des Anspruchs 1. Bezüglich eines Pulsstromrichters wird die Aufgabe erfindungsgemäß gelöst durch die Merkmale des Anspruchs 5. Bezüglich eines Leistungshalbleitermoduls für einen Pulsstromrichter wird die Aufgabe schließlich erfindungsgemäß gelöst durch die Merkmale des Anspruchs 9. Vorteilhafte und teils für sich gesehen erfinderische Ausgestaltungen und Weiterentwicklungen der Erfindung sind in den Unteransprüchen und der nachfolgenden Beschreibung dargelegt. Die Erfindung geht aus von einem Pulsstromrichter, der in an sich üblicher Weise eine Anzahl von aktiv schaltbaren, unipolaren Halbleiterschaltern mit jeweils einer parallelen Freilaufdiode umfasst. Die Halbleiterschalter sind vorzugsweise als MOSFET, insbesondere auf Basis von SiC, realisiert. Bei den Freilaufdioden des Pulsstromrichters handelt es sich vorzugsweise um die internen (Body-)Dioden der Halbleiterschalter. Die Erfindung kann vorteilhaft aber auch bei solchen Pulsstromrichtern eingesetzt werden, bei denen die Freilaufdioden durch von den Halbleiterschaltern separate Bauelemente gebildet sind.

Der Pulsstromrichter umfasst des Weiteren eine Steuereinheit zur Ansteuerung eines jeden Halbleiterschalters mit einem jeweils zugeordneten Steuersignal. Die Steuereinheit ist hierbei vorzugsweise als anwendungspezifischer, integrierter Schaltkreis (ASIC) ausgebildet. Alternativ hierzu kann diese Steuereinheit allerdings im Rahmen der Erfindung auch durch ein programmierbares Bauteil, insbesondere einen Mikrocontroller mit einem darin lauffähig implementierten Steuerprogramm (Firmware) gebildet sein. Bei den von der Steuereinheit zur Ansteuerung der Halbleiterschalter ausgegebenen Steuersignalen handelt es sich insbesondere um zeitlich kontinuierliche, digitale Steuersignale, beispielsweise um Steuerspannungen, die zwischen den Werten +5V ("HIGH") und 0V ("LOW") wechseln.

Die Halbleiterschalter des Pulsstromrichters werden allerdings von der Steuereinheit nicht unmittelbar angesteuert.

Vielmehr sind der Steuereinheit und den Halbleiterschaltern im Rahmen des Pulsstromrichters eine Anzahl von Treiberschaltungen zwischengeschaltet, die die Steuersignale der Steuereinheit in geeignete Gate-Spannungen zur Aufsteuerung bzw. Absteuerung der einzelnen Halbleiterschalter umsetzen. Die Treiberschaltungen befinden sich hierbei in demselben Stromkreis wie die jeweils zugeordneten Halbleiterschalter und sind insbesondere mit dem jeweiligen Steueranschluss (Gate-Anschluss oder kurz Gate) dieser Halbleiterschalter galvanisch verbunden. Mit der Steuereinheit können alle Treiberschaltungen oder zumindest eine der Treiberschaltungen (insbesondere die den niederpotentialseitigen Halbleiterschaltern zugeordneten Treiberschaltungen) ebenfalls galvanisch verbunden sein. Vorzugsweise sind aber alle Treiberschaltungen oder zumindest eine der Treiberschaltungen (insbesondere die den hochpotentialseitigen Halbleiterschaltern zugeordneten Treiberschaltungen) mit der Steuereinheit über eine Potentialtrennung verbunden. Infolge der Potentialtrennungen sind diese Treiberschaltungen somit von der Steuereinheit galvanisch getrennt.

Vorzugsweise sind die Treiberschaltungen und die Halbleiterschalter einander paarweise zugeordnet, so dass jeder Treiberschaltung genau ein Halbleiterschalter zugeordnet ist, und umgekehrt. Dessen ungeachtet können mehrere Treiberschaltungen im Rahmen der Erfindung aber auch in einer gemeinsamen Baugruppe integriert (beispielsweise auf einer gemeinsamen Leiterplatte aufgebaut) sein.

Im Zuge des erfindungsgemäßen Verfahrens ist nun vorgesehen, dass durch die genannten Treiberschaltungen jeweils eine Messgröße für den Bestromungszustand einer jeden Freilaufdiode erfasst wird. Jeder Halbleiterschalter wird hierbei durch die zugeordnete Treiberschaltung aufgesteuert, wenn die parallele Freilaufdiode nach Maßgabe der zugeordneten Messgröße bestromt ist. An sich ähnlich wie bei dem aus DE 10 2008 036 485 A1 bekannten Verfahren werden also die Freilaufdioden des Pulsstromrichters durch gezielte Aufsteuerung des parallelen Halbleiterschalters überbrückt, wodurch die durch die in Vorwärtsrichtung betriebenen Freilaufdioden verursachten Verluste wesentlich reduziert werden. Im Unterschied zu dem bekannten Verfahren wird diese aktive Aufsteuerung der Halbleiterschalter aber nicht durch die - regelmäßig von den Leistungshalbleitern des Pulsstromrichters potentialgetrennte - Steuereinheit vorgenommen, sondern von den mit den Leistungshalbleitern im selben Stromkreis angeordneten Treiberschaltungen. Für die Übertragung der verfahrensgemäß erhobenen Messgrößen und für die Ansteuerung der Halbleiterschalter ist somit eine Potentialtrennung weder erforderlich noch vorgesehen, so dass der damit verbundene Schaltungsaufwand entfällt. Zudem wird durch die Integration dieser Funktionalität in die Treiberschaltungen eine besonders schnelle Reaktion auf Änderungen des Bestromungszustands der Freilaufdioden ermöglicht.

In einer besonders einfach umsetzbaren und effizienten Ausführung , welche jedoch nicht Teil der Erfindung ist, sondern nur beispielhaft zum Verständnis erwähnt wird, wird jeder Halbleiterschalter durch die jeweils zugeordnete Treiberschaltung immer dann (und unabhängig von dem Wert des diesbezüglich von der Steuereinheit ausgegebenen Steuersignals) aufgesteuert, wenn und solange die parallele Freilaufdiode nach Maßgabe der zugeordneten Messgröße bestromt ist. Der Einschaltbefehl zur Aufsteuerung des jeweiligen Halbleiterschalters wird in diesem Fall somit von der Treiberschaltung autark und ohne Rücksicht auf das Verhalten der Steuereinheit ausgegeben. Diese Verfahrensvariante wird dann bevorzugt gewählt, wenn die Reaktionsgeschwindigkeit, mit der die Treiberschaltungen den zugeordneten Halbleiterschalter bei einem Einbruch des Diodenstroms in der parallelen Freilaufdiode abschalten, schnell genug ist, um im Falle eines Kommutierungsvorgangs in der betreffenden Halbrücke den Aufbau eines unzulässig hohen Kurzschlussstroms zu vermeiden.

Insbesondere bei Ausführungsformen des Pulsstromrichters, bei denen eine hinreichend schnelle Abschaltung der Halbleiterschalter durch die jeweils zugeordnete Treiberschaltung nicht gewährleistet werden kann, wird in einer dann bevorzugten Verfahrensvariante jeder Halbleiterschalter nach einem modifizierten Verfahren angesteuert. Dabei wird jeder Halbleiterschalter, wenn und solange die parallele Freilaufdiode nach Maßgabe der zugeordneten Messgröße bestromt ist, in Reaktion auf einen in dem zugehörigen Steuersignal kodierten Abschaltbefehl für eine vorgegebene Sperrzeit abgesteuert. Ansonsten - wenn also während einer Betriebsphase, in der die parallele Freilaufdiode nach Maßgabe der zugeordneten Messgröße bestromt ist, durch die Steuereinheit kein Abschaltbefehl für den zugeordneten Halbleiterschalter ausgegeben wird - wird jeder Halbleiterschalter durch die zugeordnete Treiberschaltung (wie bei der vorstehend beschriebenen Verfahrensvariante) unabhängig von dem Wert des jeweils zugehörigen Steuersignals aufgesteuert.

Durch die in Reaktion auf einen Abschaltbefehl der Steuereinheit von der Treiberschaltung vorgenommene vorübergehende Abschaltung des zugeordneten Halbleiterschalters wird der Aufbau eines unzulässig hohen Kurzschlussstroms sicher ausgeschlossen. Die Sperrzeit, für die die Treiberschaltung den betreffenden Halbleiterschalter in Reaktion auf den Abschaltbefehl der Steuereinheit absteuert, ist hinreichend groß gewählt, dass die damit verbundene Sperrung des abzuschaltenden Halbleiterschalters so lange aufrechterhalten wird, bis im Zuge eines Kommutierungsvorgangs der jeweils andere Halbleiterschalter derselben Halbbrücke sicher eingeschaltet ist und den Phasenstrom übernommen hat. Die Sperrzeit ist andererseits hinreichend kurz gewählt, dass, für den Fall, dass der Diodenstrom nicht zum Erliegen kommt, eine Überhitzung und damit verbundene Beschädigung oder Zerstörung der Freilaufdiode ausgeschlossen ist.

Als Messgröße für den Bestromungszustand der jeweiligen Freilaufdiode werden vorzugsweise die über dieser Freilaufdiode abfallende Diodenspannung (entsprechend der "Drain-Source-Spannung" des parallelen Halbleiterschalters) oder der durch die Freilaufdiode fließende Strom unmittelbar gemessen. Alternativ hierzu wird die Spannung nicht direkt an der Freilaufdiode gemessen, sondern in einem hierzu parallelgeschalteten Messstrang, in den eine Messdiode in Serie mit einem hochohmigen und somit strombegrenzenden Vorwiderstand geschaltet ist. Bei der Messdiode handelt es sich im Gegensatz zu der Freilaufdiode nicht um ein Leistungshalbleiterbauteil, sondern um eine einfache Diode geringer Belastbarkeit. Die Messdiode ist daher durch ein preisgünstiges Bauteil realisiert. Als Messgröße für den Bestromungszustand der jeweiligen Freilaufdiode wird hierbei vorzugsweise die über dem Vorwiderstand abfallende Spannung gemessen.

Anstelle der über dem Vorwiderstand abfallenden Spannung kann im Rahmen der Erfindung grundsätzlich aber auch die über Messdiode abfallende Spannung als Messgröße zur Erkennung des Bestromungszustandes der Freilaufdiode herangezogen werden.

Bei dem erfindungsgemäßen Pulsstromrichter sind die den Halbleiterschaltern zugeordneten Treiberschaltungen allgemein zur Durchführung des erfindungsgemäßen Verfahrens in einer der vorstehend beschriebenen Ausführungsvarianten eingerichtet. Konkret sind die Treiberschaltungen also dazu eingerichtet, eine Messgröße für den Bestromungszustand einer jeden Freilaufdiode (insbesondere die über der Freilaufdiode abfallende Dioden-Spannung oder den durch die Freilaufdiode fließenden Strom oder die in dem parallelgeschalten Messstrang abfallende Spannung) zu erfassen und jeden der Halbleiterschalter aufzusteuern, wenn die parallele Freilaufdiode nach Maßgabe der zugeordneten Messgröße bestromt ist.

Eine besondere Verkörperung der Erfindung ist ferner durch ein Leistungshalbleitermodul für einen Pulsstromrichter gegeben, das einen Halbleiterschalter, eine parallelgeschaltete Freilaufdiode sowie eine Treiberschaltung umfasst, wobei die Treiberschaltung zur Ansteuerung des Halbleiterschalters mit einem Steueranschluss (Gate) des Halbleiterschalters galvanisch verbunden und ihrerseits mit einem externen Steuersignal ansteuerbar ist. Im Rahmen des Leistungshalbleitermoduls sind der Halbleiterschalter, die parallelen Freilaufdioden und die zugehörige Treiberschaltung insbesondere in einem gemeinsamen integrierten Schaltkreis zusammengefasst oder auf einer gemeinsamen Leiterplatte vormontiert. Erfindungsgemäß ist dabei wiederum die Treiberschaltung zur Durchführung des erfindungsgemäßen Verfahrens in einer der vorstehend beschriebenen Ausführungsvarianten eingerichtet. Konkret ist die Treiberschaltung wiederum dazu eingerichtet, eine Messgröße für den Bestromungszustand der Freilaufdiode zu erfassen und den Halbleiterschalter aufzusteuern, wenn die Freilaufdiode nach Maßgabe der Messgröße bestromt ist.

Nachfolgend werden Ausführungsbeispiele der Erfindung anhand einer Zeichnung näher erläutert. Darin zeigen:

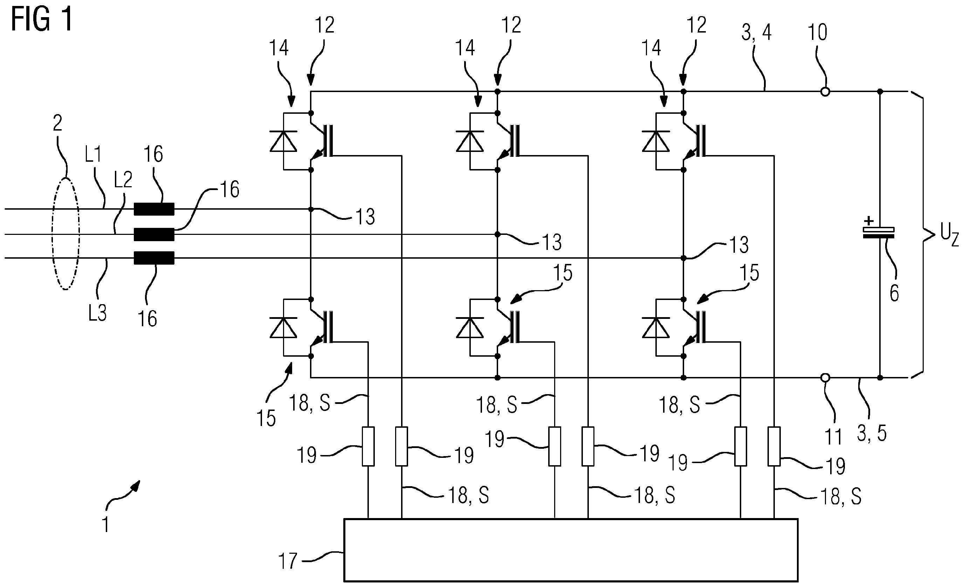

- FIG 1: in einem schematischen Schaltbild einen Pulsstromrichter einer Umrichterschaltung, mit drei parallel zueinander in einen Gleichspannungszwischenkreis geschalteten Halbbrücken, in denen jeweils zwei Leistungshalbleitermodule in Reihe geschaltet sind, sowie mit einer gemeinsamen Steuereinheit zur Ansteuerung der Leistungshalbleitermodule mit einem jeweils zugeordneten Steuersignal,

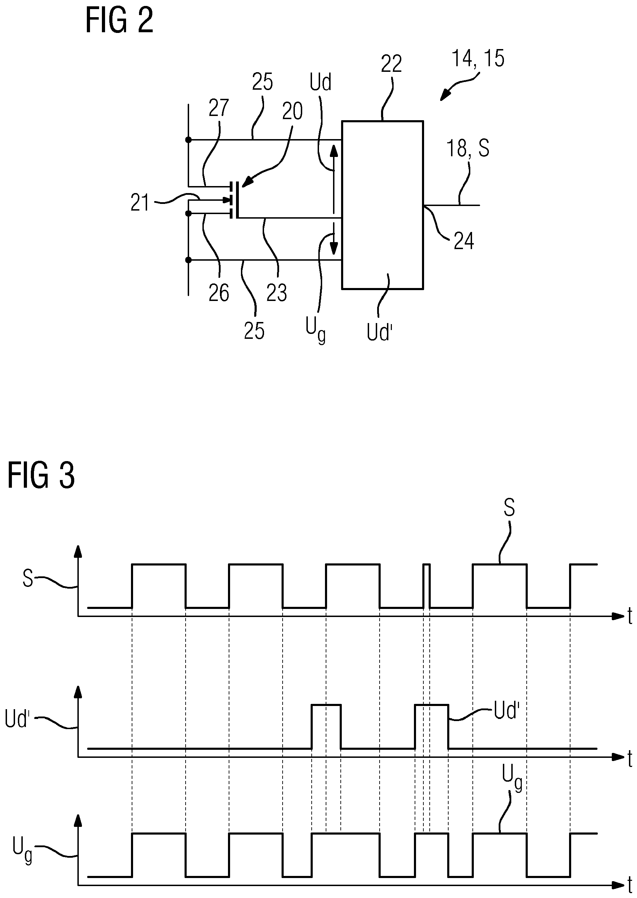

- FIG 2: in einem Schaltbild eines der Halbleitermodule des Pulsstromrichters gemäß FIG 1, das einen Halbleiterschalter und eine parallelgeschaltete Freilaufdiode sowie eine Treiberschaltung umfasst, wobei die Treiberschaltung die über der Freilaufdiode abfallende Diodenspannung als Messgröße für den Bestromungszustand der Freilaufdiode erfasst, und den Halbleiterschalter in Abhängigkeit von dieser Messgröße sowie von dem von der Steuereinheit zugeführten Steuersignal mit einer Gate-Spannung ansteuert,
- FIG 3: anhand von drei synchronen, übereinander dargestellten zeitlichen Diagrammen des Steuersignals (oberes Diagramm), der Diodenspannung (mittleres Diagramm) und der Gate-Spannung (unteres Diagramm) ein die Funktion der Treiberschaltung gemäß FIG 1 und 2 verdeutlichendes, exemplarisches Schaltspiel,

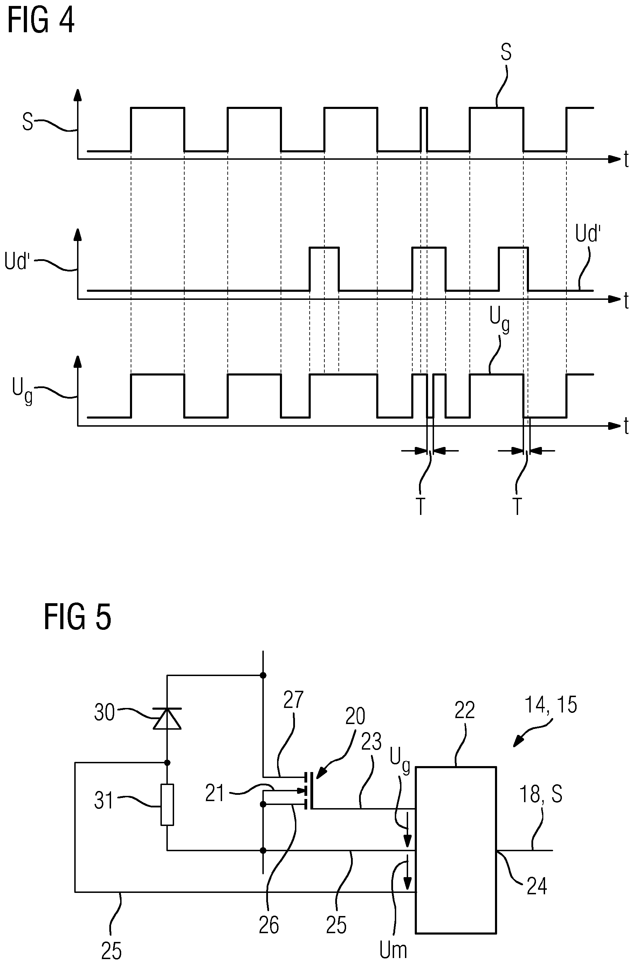

- FIG 4: in Darstellung gemäß FIG 3 ein die Funktion einer Variante der Treiberschaltung verdeutlichendes Schaltspiel, und
- FIG 5: in Darstellung gemäß FIG 2 eine alternative Ausführung des Leistungshalbleitermoduls, wobei der Freilaufdiode in einem Messstrang eine Messdiode in Serie mit einem Vorwiderstand parallelgeschaltet ist, und wobei die Treiberschaltung die über dem Vorwiderstand abfallende Spannung als Messgröße für den Bestromungszustand der Freilaufdiode erfasst.

Einander entsprechende Teile und Größen sind in allen Figuren stets mit gleichen Bezugszeichen versehen.

Der in FIG 1 dargestellte Pulsstromrichter 1 ist Teil einer (nicht näher bezeichneten) Umrichterschaltung, die einem Stromnetz 2 mit drei Netzphasen L1, L2, L3 und einem (nicht dargestellten) Elektromotor zwischengeschaltet ist. In der Umrichterschaltung gemäß FIG 1 ist der Pulsstromrichter 1 als Gleichrichter eingesetzt und entsprechend zwischen dem Stromnetz 2 und einem Zwischenkreis 3 angeordnet. Der Zwischenkreis 3 ist hier exemplarisch als Gleichspannungs-Zwischenkreis ausgebildet. Zwischen dem Zwischenkreis 3 und dem zu versorgenden Elektromotor umfasst die Umrichterschaltung einen weiteren, als Wechselrichter betriebenen Pulsstromrichter, der hinsichtlich seines Aufbaus und der nachfolgend näher beschriebenen Funktionsweise dem in FIG 1 dargestellten Pulsstromrichter 1 entspricht.

Der Zwischenkreis 3 führt eine Zwischenkreisspannung Uz. Er umfasst eine Hochpotentialschiene 4, die ein elektrisches Potential +Uz/2 führt, sowie eine Niederpotentialschiene 5, die ein demgegenüber erniedrigtes elektrisches Potential -Uz/2 führt. In den Zwischenkreis 3 ist eine Zwischenkreiskapazität 6 geschaltet.

Der Pulsstromrichter 1 ist mit einem Hochpotentialanschluss 10 mit der Hochpotentialschiene 4, und mit einem Niederpotentialanschluss 11 mit der Niederpotentialschiene 5 des Zwischenkreises 3 verbunden. Innerhalb des Pulsstromrichters 1 sind den Anschlüssen 10 und 11 drei zueinander parallele aktive Halbbrücken 12 zwischengeschaltet, die über je eine korrespondierende Phasenklemme 13 mit jeweils einer der Netzphasen L1 bis L3 verschaltet sind.

Innerhalb jeder der drei Halbbrücken 12 ist jeweils zwischen der Phasenklemme 13 und dem Hochpotentialanschluss 10 ein hochpotentialseitiges Leistungshalbleitermodul 14 angeordnet. Zwischen der Phasenklemme 13 und dem Niederpotentialanschluss 11 ist in jede der drei Halbbrücken 12 jeweils ein niederpotentialseitiges Leistungshalbleitermodul 15 geschaltet. Innerhalb jeder Halbbrücke 13 sind somit das jeweilige Leistungshalbleitermodul 14 und das jeweilige Leistungshalbleitermodul 15 in Reihe geschaltet.

Den Phasenklemmen 13, und damit den Halbbrücken 12 ist in jeder Netzphase L1-L3 optional jeweils eine Kommutierungsinduktivität 16 vorgeschaltet. Insbesondere wenn der erfindungsgemäße Pulsstromrichter 1 in einer Umrichterschaltung mit abweichender Topologie (z.B. einer Umrichterschaltung mit Stromzwischenkreis) eingesetzt wird, können Kommutierungsinduktivitäten 16 auch entfallen.

Dem Pulsstromrichter 1 ist weiterhin eine Steuereinheit 17 beigeordnet, die zur Ansteuerung aller Leistungshalbleitermodule 14 und 15 dient. Die vorzugsweise durch einen ASIC gebildete Steuereinheit 17 ist mit jedem der Leistungshalbleitermodule 14 und 15 über eine jeweils zugeordnete Steuerleitung 18 zur Zuführung eines jeweils zugeordneten Steuersignals S verschaltet. Die Steuersignale S werden von der Steuereinheit 17 beispielsweise als zeitlich kontinuierliche Spannungssignale ausgegeben, die zwischen Spannungswerten von +5V und 0V wechseln. Eine steigende Flanke eines jeden Steuersignals S (also ein Signalwechsel von 0V auf +5V) kodiert hierbei einen Einschaltbefehl für das jeweilige Leistungshalbleitermodul 14, 15. Eine fallende Flanke des Steuersignals S (also ein Signalwechsel von 5V auf 0V) kodiert entsprechend einen Ausschaltbefehl für das zugehörige Leistungshalbleitermodul 14, 15.

In der Ausführung des Pulsstromrichters 1 gemäß FIG 1 ist in jeder der (in FIG 1 der besseren Übersicht halber gestrichelt dargestellten) Steuerleitungen 18 eine Potentialtrennung 19, z.B. in Form eines Optokopplers, angeordnet. Infolge der Potentialtrennungen 19 sind die Leistungshalbleitermodule 14 und 15 von der Steuereinheit 17 somit galvanisch getrennt. Die in FIG 1 als separate Bauteile dargestellten Potentialtrennungen 19 sind alternativ als integrale Bestandteile des jeweils zugeordneten Leistungshalbleitermoduls 14 und 15 ausgebildet.

In FIG 2 ist eines der identisch aufgebauten Leistungshalbleitermodule 14 und 15 näher dargestellt. Aus dieser Darstellung ist erkennbar, dass jedes Leistungshalbleitermodul 14, 15 einen Halbleiterschalter 20 (hier in Form eines MOSFET, insbesondere auf Basis von SiC) umfasst, dessen interne Body-Diode als parallelgeschaltete Freilaufdiode 21 dient. jedes Leistungshalbleitermodul 14, 15 umfasst des Weiteren eine (auch als Gate-Treiber oder Gate-Unit) bezeichnete Treiberschaltung 22, die den zugeordneten Halbleiterschalter 20 mittels einer Gate-Spannung Ug reversibel aufsteuert (indem sie die Drain-Source-Strecke des Halbleiterschalters 20 elektrisch leitend schaltet) und absteuert (indem sie die Drain-Source-Strecke elektrisch sperrt). Die Treiberschaltung 22 ist zur Zuführung der Gate-Spannung Ug galvanisch mit einem Gate-Anschluss 23 des Halbleiterschalters 20 verbunden. Als Gate-Spannung Ug wird von der Treiberschaltung 22 ein zeitlich kontinuierliches Spannungssignal ausgegeben, das zwischen Spannungswerten von beispielsweise +15V und -10V geschaltet wird, um den Halbleiterschalter 20 auf- bzw. abzusteuern.

Jedes der Leistungshalbleitermodule 14, 15 ist durch einen integrierten Schaltkreis oder durch eine Gruppe von auf einer gemeinsamen Leiterplatte vormontierten Bauelementen gebildet. Jedes der einzelnen Leistungshalbleitermodule 14, 15 bildet somit ein von den übrigen Leistungshalbleitermodule 14, 15 separates Bauteil. Allerdings können die Halbleiterschalter 20, Freilaufdioden 21 und Treiberschaltungen 22 in alternativer Ausgestaltung des Pulsstromrichters 1 auch in anderer Weise zu Baugruppen gruppiert sein. Beispielsweise können mehrere Halbleiterschalter 20, Freilaufdioden 21 und Treiberschaltungen 22 auch zu größeren Modulen zusammengefasst sein. Auch muss der Pulsstromrichter 1 im Rahmen der Erfindung nicht notwendigerweise modular aufgebaut sein.

Als Eingangsgröße ist einem Steuereingang 24 der Treiberschaltung 22 über die zugehörige Steuerleitung 18 das zugehörige Steuersignal S der Steuereinheit 17 zugeführt.

Des Weiteren ist die Treiberschaltung 22 über Messleitungen 25 galvanisch mit einem Drain-Anschluss 26 und einem Source-Anschluss 27 des Halbleiterschalters 20 verbunden. Über diese Messleitungen 25 erfasst die Treiberschaltung 22 die Drain-Source-Spannung des Halbleiterschalters 20, die der über der Freilaufdiode 21 abfallenden Diodenspannung Ud entspricht. Die Diodenspannung Ud wird hierbei von der Treiberschaltung 22 als Messgröße zur Detektion des Bestromungszustands der Freilaufdiode 21 herangezogen. Ein negativer Wert der Diodenspannung Ud ist indikativ dafür, dass die Freilaufdiode 21 unbestromt ist. Ein positiver Wert der Diodenspannung Ud zeigt dagegen einen Stromfluss durch die Freilaufdiode 21 an. In bevorzugter Ausgestaltung wandelt die Treiberschaltung 22 die kontinuierlich variierende Diodenspannung Ud zunächst in ein digitales Spannungssignal um, das für negative Diodenspannung Ud (und entsprechend unbestromte Freilaufdiode 21) den Wert 0V, und für positive Diodenspannung Ud (und entsprechend bestromte Freilaufdiode 21) den Wert +5V aufweist, und das nachfolgend als (modifizierte) Diodenspannung Ud' bezeichnet ist (Ud ≤ 0 → Ud' = 0V; Ud > 0 → Ud' = +5V).

Die Treiberschaltung 22, die wahlweise in analoger oder digitaler elektrischer Schaltungstechnik realisiert ist, schaltet die Gate-Spannung Ug in Abhängigkeit des Steuersignals S und der Diodenspannung Ud' (mithin in Abhängigkeit von dem Bestromungszustand der Freilaufdiode 21) nach dem folgenden Verfahren:
- Für unbestromte Freilaufdiode 21 (Ud' = 0) schaltet die Treiberschaltung 22 die Gate-Spannung Ug gleichläufig mit dem Steuersignal S (S = 0V → Ug = -10VV; S = +5V → Ug = +15V). Mit jedem Einschaltbefehl der Steuereinheit 17 steuert die Treiberschaltung 22 den Halbleiterschalter 20 somit auf, und mit jedem Abschaltbefehl der Steuereinheit 17 steuert die Treiberschaltung 22 den Halbleiterschalter 20 somit ab.
- Für bestromte Freilaufdiode 21 (Ud' = 1) steuert die Treiberschaltung 22 die Gate-Spannung Ug dagegen unabhängig von dem Wert des Steuersignals S auf (Ug = +15V).

Die von der Treiberschaltung 22 ausgegebene Gate-Spannung Ug ist somit proportional zu einer logischen ODER-Verknüpfung des Steuersignals S und der Diodenspannung Ud'.

Ein sich aus dieser Funktionalität der Treiberschaltung 22 ergebendes Schaltspiel ist in FIG 3 anhand von drei synchronen Diagrammen dargestellt, in denen (von oben nach unten) jeweils gegen die Zeit t ein beispielhafter Verlauf des Steuersignals S, der Diodenspannung Ud' und der Gate-Spannung Ug angetragen sind.

Wenn und solange die Freilaufdiode 21 bestromt ist, wird sie durch Aufsteuerung des zugehörigen Halbleiterschalters 20 niederohmig überbrückt, wobei diese Überbrückung autark (ohne Wechselwirkung mit der Steuereinheit 17) durch die Treiberschaltung 22 gesteuert wird.

Das vorstehend beschriebene Verfahren wird allerdings nur bei Ausführungsformen des Leistungshalbleitermoduls 14, 15 implementiert, bei denen die Treiberschaltung 22 auf einen Wechsel des Bestromungszustands der Freilaufdiode 21 schnell, insbesondere innerhalb von 2 bis 10 Nanosekunden reagiert.

Erkannter maßen kann das vorstehend beschriebene Verfahren bei langsamerer Reaktion der Treiberschaltung 22 im Falle der Kommutierung einer Halbbrücke 12 des Pulswechselrichters 1 zu Fehlern führen, die unter ungünstigen Umständen in einer Beschädigung oder sogar Zerstörung eines Leistungshalbleitermoduls 14, 15 resultieren können. Als Kommutierung wird dabei ein Schaltprozess bezeichnet, bei dem durch die Steuereinheit 17 für einen stromleitenden Halbleiterschalter 20 einer Halbbrücke 12 ein Ausschaltbefehl, und mit kurzer Verzögerung für den anderen Halbleiterschalter 20 derselben Halbbrücke 12 ein Einschaltbefehl ausgegeben wird. Sofern der auszuschaltende Halbleiterschalter 20 und die parallele Freilaufdiode 21 zu diesem Zeitpunkt in Gegenrichtung zu dem in dem Zwischenkreis herrschenden Spannungsgefälle bestromt sind, kann der Kommutierungsprozess bei dem vorstehend beschriebenen Verfahren dazu führen, dass beide Halbleiterschalter 20 der Halbbrücke 12 aufgesteuert werden, so dass der Zwischenkreis 3 über diese Halbbrücke 12 kurzgeschlossen wird.

Der Kurzschluss führt quasi-instantan (typischerweise innerhalb von 10 bis 200 Nanosekunden) zum Abbau des Diodenstroms und dem Aufbau eines - im Wesentlichen nur von der Streuinduktivität in dem Kommutierungskreis begrenzten - Kurzschlussstroms, der die betreffenden Leitungshalbleitermodulde 14, 15 gefährdet.

Sofern in diesem Fall nach dem Einbruch des Diodenstroms eine hinreichend schnelle Absteuerung des abzuschaltenden Halbleiterschalters 20 nicht gewährleistet werden kann, wird eine Variante der Treiberschaltung 22 eingesetzt, die das oben beschriebene Verfahren mit der Modifikation durchführt, dass die Treiberschaltung 22 den Halbleiterschalter 20 für eine vorgegebene Sperrzeit T (FIG 4) absteuert, wenn bei bestromter Freilaufdiode (Ud' = 1) eine fallende Flanke des Steuersignals S (mithin ein Abschaltbefehl der Steuereinheit 17) erfolgt, wenn also der Wert des Steuersignals S von +5V auf 0V wechselt.

Die Sperrzeit T ist beispielsweise auf ca. 2 Mikrosekunden dimensioniert. Die Sperrzeit T ist hiermit hinreichend lang gewählt, dass im Falle eines Kommutierungsvorgangs bis zum Ablauf der Sperrzeit T der durch die Steuereinheit 17 angeschaltete Halbleiterschalter 20 sicher aufgesteuert ist und den Phasenstrom übernommen hat. Sie ist andererseits hinreichend kurz gewählt, dass in anderen Fällen, in denen der Diodenstrom während der Sperrzeit T nicht zum Erliegen kommt, eine Überhitzung und damit verbundene Beschädigung der bestromten Freilaufdiode 21 ausgeschlossen werden kann.

Ein sich aus dieser modifizierten Funktionalität der Treiberschaltung 22 ergebendes Schaltspiel ist in FIG 4 dargestellt.

FIG 5 zeigt eine alternative Ausführungsform des Leistungshalbleitermoduls 14, 15, bei der dem Halbleiterschalter 20 und der darin integrierten Freilaufdiode 21 in einem parallelen Messstrang eine Messdiode 30 in Serie mit einem hochohmigen Vorwiderstand 31 parallelgeschaltet sind.

Anstelle der Diodenspannung Ud erfasst die Treiberschaltung 22 hierbei über die Messleitungen 25 eine - proportional gegenüber der Diodenspannung Ud erniedrigte - Messspannung Um, die über dem Vorwiderstand 31 abfällt.

Von der Funktionalität her entspricht die Treiberschaltung 22 gemäß FIG 5 der Ausführungsvariante gemäß FIG 2 bis 4. Sie schaltet die Gate-Spannung Ug also nach einer der beiden vorstehend beschriebenen Verfahrensvarianten, wobei sie allerdings als Eingangsgröße für das Verfahren anstelle der Diodenspannung Ud die Messspannung Um heranzieht.

Die Erfindung wird an den vorstehend beschriebenen Ausführungsbeispielen besonders deutlich, ist gleichwohl auf diese Ausführungsbeispiele aber nicht beschränkt. Vielmehr können weitere Ausführungsbeispiele der Erfindung aus den Ansprüchen und der vorstehenden Beschreibung abgeleitet werden.

## Patentansprüche

1. Verfahren zum Betrieb eines Pulsstromrichters (1), umfassend
- eine Anzahl von aktiv schaltbaren, unipolaren Halbleiterschaltern (20) mit jeweils einer parallelen Freilaufdiode (21),
- eine Steuereinheit (17) zur Ansteuerung eines jeden Halbleiterschalters (20) mit einem jeweils zugeordneten Steuersignal (S) sowie
- eine Anzahl von Treiberschaltungen (22), die der Steuereinheit (17) und den Halbleiterschaltern (20) zwischengeschaltet sind,
wobei verfahrensgemäß
- durch die Treiberschaltungen (22) jeweils eine Messgröße (Ud, Um) für den Bestromungszustand einer jeden Freilaufdiode (21) erfasst wird, und
- durch die Treiberschaltungen (22) jeder Halbleiterschalter (20) aufgesteuert wird, wenn die parallele Freilaufdiode (21) nach Maßgabe der zugeordneten Messgröße (Ud, Um) bestromt ist,
**dadurch gekennzeichnet, dass** durch die Treiberschaltungen (22) jeder Halbleiterschalter (20), wenn und solange die parallele Freilaufdiode (21) nach Maßgabe der zugeordneten Messgröße (Ud, Um) bestromt ist,
- nach einem in dem zugehörigen Steuersignal (S) kodierten Abschaltbefehl für eine vorgegebene Sperrzeit (T) abgesteuert wird, und
- ansonsten unabhängig von dem Wert des jeweils zugehörigen Steuersignals (S) aufgesteuert wird.

2. Verfahren nach Anspruch 1,
wobei jeder Halbleiterschalter (20) über einen Steueranschluss (23) galvanisch mit einer der Treiberschaltungen (22) verbunden ist, und wobei mindestens eine der Treiberschaltungen (22) über eine Potentialtrennung (19) mit der Steuereinheit (17) verbunden ist.

3. Verfahren nach Anspruch 1 oder 2,
wobei als Messgröße für den Bestromungszustand der jeweiligen Freilaufdiode (21) die über dieser Freilaufdiode (21) abfallende Spannung (Ud) oder der durch diese Freilaufdiode (21) fließende Strom unmittelbar gemessen werden.

4. Verfahren nach Anspruch 1 oder 2,
wobei als Messgröße für den Bestromungszustand der jeweiligen Freilaufdiode (21) eine Messspannung (Um) gemessen wird, die in einem zu dieser Freilaufdiode (21) parallelgeschaltete Messstrang abfällt, in den eine Messdiode (30) in Serie mit einem Vorwiderstand (31) geschaltet sind.

5. Pulsstromrichter (1), umfassend
- eine Anzahl von aktiv schaltbaren, unipolaren Halbleiterschaltern (20) mit jeweils einer parallelgeschalteten Freilaufdiode (21),
- eine Steuereinheit (17) zur Ansteuerung eines jeden Halbleiterschalters (20) mit einem jeweils zugeordneten Steuersignal (S) sowie
- eine Anzahl von Treiberschaltungen (22), die der Steuereinheit (17) und den Halbleiterschaltern (20) zwischengeschaltet sind,
wobei die Treiberschaltungen (22) dazu eingerichtet sind
- eine Messgröße (Ud, Um) für den Bestromungszustand einer jeden Freilaufdiode (21) zu erfassen, und
- jeden der Halbleiterschalter (20) aufzusteuern, wenn die parallele Freilaufdiode (21) nach Maßgabe der zugeordneten Messgröße (Ud, Um) bestromt ist,
**dadurch gekennzeichnet, dass** die Treiberschaltungen (22) dazu eingerichtet sind, jeden Halbleiterschalter (20), wenn und solange die parallele Freilaufdiode (21) nach Maßgabe der zugeordneten Messgröße (Ud, Um) bestromt ist,
- nach einem in dem zugehörigen Steuersignal (S) kodierten Abschaltbefehl für eine vorgegebene Sperrzeit (T) abzusteuern, und
- ansonsten unabhängig von dem Wert des jeweils zugehörigen Steuersignals (S) aufzusteuern.

6. Pulsstromrichter (1) nach Anspruch 5,
wobei jeder Halbleiterschalter (20) über einen Steueranschluss (23) galvanisch mit einer der Treiberschaltungen (22) verbunden ist, und wobei mindestens eine der Treiberschaltungen (22) über eine Potentialtrennung (19) mit der Steuereinheit (17) verbunden ist.

7. Pulsstromrichter (1) nach Anspruch 5 oder 6,
wobei die Treiberschaltungen (22) dazu eingerichtet sind, als Messgröße für den Bestromungszustand der jeweiligen Freilaufdiode (21) die über dieser Freilaufdiode (21) abfallende Spannung (Ud) oder den durch diese Freilaufdiode (21) flie-βenden Strom unmittelbar zu messen.

8. Pulsstromrichter (1) nach Anspruch 5 oder 6,
wobei die Treiberschaltungen (22) dazu eingerichtet sind, als Messgröße für den Bestromungszustand der jeweiligen Freilaufdiode (21) eine Messspannung (Um) zu messen, die in einem zu dieser Freilaufdiode (21) parallelgeschalteten Messstrang abfällt, in den eine Messdiode (30) in Serie mit einem Vorwiderstand (31) geschaltet ist.

9. Leistungshalbleitermodul (14, 15) für einen Pulsstromrichter (1),
- mit einem Halbleiterschalter (20),
- mit einer parallelgeschalteten Freilaufdiode (21) sowie
- mit einer Treiberschaltung (22), die zur Ansteuerung des Halbleiterschalters (20) mit einem Steueranschluss (23) des Halbleiterschalters (20) galvanisch verbunden ist, und die ihrerseits über einen Steuereingang (24) mit einem externen Steuersignal (S) ansteuerbar ist,
wobei die Treiberschaltung (22) dazu eingerichtet ist,
- eine Messgröße (Ud, Um) für den Bestromungszustand der Freilaufdiode (21) zu erfassen und,
- den Halbleiterschalter (20) aufzusteuern, wenn die Freilaufdiode (21) nach Maßgabe der Messgröße (Ud, Um) bestromt ist,
**dadurch gekennzeichnet, dass** die Treiberschaltung (22) dazu eingerichtet ist, den Halbleiterschalter (20), wenn und solange die Freilaufdiode (21) nach Maßgabe der zugeordneten Messgröße (Ud, Um) bestromt ist,
- nach einem in dem zugehörigen Steuersignal (S) kodierten Abschaltbefehl für eine vorgegebene Sperrzeit (T) abzusteuern, und
- ansonsten unabhängig von dem Wert des externen Steuersignals (S) aufzusteuern.

10. Leistungshalbleitermodul (14, 15) nach Anspruch 9,
mit einer Potentialtrennung 19, die dem Steuereingang (24) der Treiberschaltung (22) vorgeschaltet ist.

## Claims

1. Method for operating a pulse power converter (1), comprising
- a number of actively switchable, unipolar semiconductor switches (20) with a parallel free-wheeling diode (21) in each case,
- a control unit (17) for actuating each semiconductor switch (20) with a respectively assigned control signal (S), and
- a number of driver circuits (22), which are interconnected between the control unit (17) and the semiconductor switches (20),
wherein, in line with the procedure
- a measured variable (Ud, Um) is detected for the energization state of each free-wheeling diode (21) by means of the driver circuits (22) in each case, and
- each semiconductor switch (20) is powered up by the driver circuits (22) if the parallel free-wheeling diode (21) is energized according to the assigned measured variable (Ud, Um),
**characterised in that** by means of the driver circuits (22) of each semiconductor switch (20), when and provided the parallel free-wheeling diode (21) is energized according to the assigned measured variable (Ud, Um),
- according to a switch-off command encoded in the associated control signal (S), powering down occurs for a predetermined blocking time (T), and
- otherwise powering up occurs independently of the value of the respectively associated control signal (S).

2. Method according to claim 1,
wherein each semiconductor switch (20) is connected galvanically with one of the driver circuits (22) by way of a control terminal (23), and wherein at least one of the driver circuits (22) is connected to the control unit (17) by way of a potential separation (19).

3. Method according to claim 1 or 2,
wherein the voltage (Ud) dropping across this free-wheeling diode (21) or the current flowing through this free-wheeling diode (21) is measured immediately as a measured variable for the energization state of the respective free-wheeling diode (21) .

4. Method according to claim 1 or 2,
wherein a measuring voltage (Um) is measured as the measured variable for the energization state of the respective free-wheeling diode (21), which measuring voltage drops in a measurement line connected in parallel with this free-wheeling diode (21), in which a measuring diode (30) is connected in series with a series resistor (31).

5. Pulse current converter (1) comprising
- a number of actively switchable, unipolar semiconductor switches (20) with a parallel-switched free-wheeling diode (21) in each case,
- a control unit (17) for actuating each semiconductor switch (20) with a respectively assigned control signal (S) and
- a number of driver circuits (22), which are interconnected between the control unit (17) and the semiconductor switches (20),
wherein the driver circuits (22) are designed
- to detect a measured variable (Ud, Um) for the energization state of each free-wheeling diode (21), and
- to power up each semiconductor switch (20) when the parallel free-wheeling diode (21) is energized according to the assigned measured variable (Ud, Um),
**characterized in that** the driver circuits (22) are designed, when and provided the parallel free-wheeling diode (21) is energized according to the assigned measured variable (Ud, Um),
- to power down each semiconductor switch (20) according to a switch-off command encoded in the associated control signal (S) for a predetermined blocking time (T), and
- otherwise to power the same up independently of the value of the respectively associated control signal (S).

6. Pulse current converter (1) according to claim 5, wherein each semiconductor switch (20) is connected galvanically with one of the driver circuits (22) by way of a control terminal (23), and wherein at least one of the driver circuits (22) is connected to the control unit (17) by way of a potential separation (19).

7. Pulse current converter (1) according to claim 5 or 6, wherein the driver circuits (22) are designed to immediately measure the voltage (Ud) dropping across this free-wheeling diode (21) or the current flowing through this free-wheeling diode (21) as a measured variable for the energization state of the respective free-wheeling diode (21).

8. Pulse current converter (1) according to claim 5 or 6, wherein the driver circuits (22) are designed to measure a measuring voltage (Um) as a measured variable for the energization state of the respective free-wheeling diode (21), said measuring voltage dropping in a measurement line connected in parallel with this free-wheeling diode (21), in which a measuring diode (30) is connected in series with a series resistor (31).

9. Power semiconductor module (14, 15) for a pulse current converter (1),
- having a semiconductor switch (20),
- having a parallel-connected free-wheeling diode (21) and
- having a driver circuit (22) which is connected galvanically with a control terminal (23) of the semiconductor switch (20) for the purpose of actuating the semiconductor switch (20), and which for its part can be actuated with an external control signal (S) by way of a control input (24),
wherein the driver circuit (22) is designed,
- to detect a measured variable (Ud, Um) for the energization state of the free-wheeling diode (21), and
- to power up the semiconductor switch (20) when the free-wheeling diode (21) is energized according to the measured variable (Ud, Um),
**characterised in that** the driver circuit (22) is designed, when and provided the free-wheeling diode (21) is energized according to the assigned measured variable (Ud, Um),
- to power down the semiconductor switch (20) according to a switch-off command encoded in the associated control signal (S) for a predetermined blocking time (T), and
- otherwise to power the same up independently of the value of the external control signal (S).

10. Power semiconductor module (14, 15) according to claim 9, with a potential separation 19, which is arranged upstream of the control input (24) of the driver circuit (22).

## Revendications

1. Procédé pour faire fonctionner un onduleur (1) à impulsions, comprenant
- un certain nombre d'interrupteurs (20) à semi-conducteur unipolaires, pouvant être fermés activement et ayant chacun une diode (21) de roue libre en parallèle,
- une unité (17) de commande pour commander chaque interrupteur (20) à semi-conducteur par un signal (S) de commande affecté respectivement ainsi que
- un certain nombre de circuits (22) d'attaque, qui sont montés entre l'unité (17) de commande et les interrupteurs (20) à semi-conducteur,
dans lequel suivant le procédé
- on relève par les circuits (22) d'attaque respectivement une grandeur (Ud, Um) de mesure de l'état d'alimentation en courant de chaque diode (21) de roue libre, et
- par les circuits (22) d'attaque on commande chaque interrupteur (20) à semi-conducteur, si la diode (21) de roue libre en parallèle est alimentée en courant selon la grandeur (Ud, Um) de mesure associée,
**caractérisé en ce que**, par les circuits (22) d'attaque, chaque interrupteur (20) à semi-conducteur, si et tant que la diode (21) de roue libre est alimentée en courant selon la grandeur (Ud, Um) de mesure associée,
- après une instruction d'arrêt codée dans le signal (S) de commande affecté, est ouvert pendant un temps (T) de blocage donné à l'avance, et
- sinon, est fermé indépendamment de la valeur du signal (S) de commande affecté respectivement.

2. Procédé suivant la revendication 1,
dans lequel chaque interrupteur (20) à semi-conducteur est, par une borne (23) de commande, relié galvaniquement à l'un des circuits (22) d'attaque, et dans lequel au moins l'un des circuits (22) d'attaque est, par une séparation (19) de potentiel, relié à l'unité (17) de commande.

3. Procédé suivant la revendication 1 ou 2,
dans lequel on mesure directement comme grandeur de mesure pour l'état d'alimentation en courant de la diode (21) de roue libre respective la tension (Ud) chutant aux bornes de cette diode (21) de roue libre ou le courant passant dans cette diode (21) de roue libre.

4. Procédé suivant l'une des revendications 1 ou 2,
dans lequel on mesure comme grandeur de mesure de l'état d'alimentation en courant de la diode (21) de roue libre respective une tension (Um) de mesure, qui chute dans une branche de mesure, qui est montée en parallèle à cette diode (21) de roue libre et dans laquelle une diode (30) de mesure est montée en série avec une résistance (31).

5. Onduleur (1) à impulsions comprenant
- un certain nombre d'interrupteurs (20) à semi-conducteur unipolaires, pouvant être fermés activement et ayant chacun une diode (21) de roue libre en parallèle,
- une unité (17) de commande pour commander chaque interrupteur (20) à semi-conducteur par un signal (S) de commande affecté respectivement, ainsi que
- un certain nombre de circuit (22) d'attaque, qui sont montés entre l'unité (17) de commande et les interrupteurs (20) à semi-conducteur,
dans lequel les circuits (22) d'attaque sont conçus
- pour relever une grandeur (Ud, Um) de mesure de l'état d'alimentation en courant de chaque diode (21) de roue libre, et
- pour fermer chaque interrupteur (20) à semi-conducteur, si la diode (21) de roue libre en parallèle est alimentée en courant selon la grandeur (Ud, Um) de mesure affectée,
**caractérisé en ce que** les circuits (22) d'attaque sont conçus pour, si et tant que la diode (21) de roue libre en parallèle est alimentée en courant selon la grandeur (Ud, Um) de mesure affectée,
- ouvrir pendant un temps (T) de blocage donné à l'avance chaque interrupteur (20) à semi-conducteur après une instruction d'arrêt codée dans le signal (S) de commande affecté, et
- sinon, le fermer indépendamment de la valeur du signal (S) de commande affecté respectivement.

6. Onduleur (1) à impulsions suivant la revendication 5,
dans lequel chaque interrupteur (20) à semi-conducteur est, par une borne (23) de commande, relié galvaniquement à l'un des circuits (22) d'attaque, et dans lequel au moins l'un des circuits (22) d'attaque est, par une séparation (19) de potentiel, relié au dispositif (17) de commande.

7. Onduleur (1) à impulsions suivant la revendication 5 ou 6,
dans lequel les circuits (22) d'attaque sont conçus pour mesurer directement comme grandeur de mesure pour l'état d'alimentation en courant de la diode (21) de roue libre respective la tension (Ud) chutant aux bornes de cette diode (21) de roue libre ou le courant passant dans cette diode (21) de roue libre.

8. Onduleur (1) à impulsions suivant la revendication 5 ou 6,
dans lequel les circuits (22) d'attaque sont conçus pour mesurer comme grandeur de mesure de l'état d'alimentation en courant de la diode (21) de roue libre respective une tension (Um) de mesure, qui chute aux bornes d'une branche de mesure, qui est montée en parallèle à cette diode (21) de roue libre et dans laquelle une diode (30) de mesure est montée en série avec une résistance (31).

9. Module (14, 15) à semi-conducteur de puissance d'un onduleur (1) à impulsions,
- comprenant un interrupteur (20) à semi-conducteur,
- comprenant une diode (21) de roue libre montée en parallèle, ainsi que
- comprenant un circuit (22) d'attaque qui, pour commander l'interrupteur (20) à semi-conducteur, est relié galvaniquement à une borne (23) de commande de l'interrupteur (20) à semi-conducteur et qui de son côté peut être commandé par l'intermédiaire d'une entrée (24) de commande par un signal (S) extérieur de commande,
dans lequel le circuit (22) d'attaque est conçu,
- pour relever une grandeur (Ud, Um) de mesure de l'état d'alimentation en courant de la diode (21) de roue libre et
- pour fermer l'interrupteur (20) à semi-conducteur si la diode (21) de roue libre est alimentée en courant selon la grandeur (Ud, Um) de mesure,
**caractérisé en ce que** le circuit (22) d'attaque est conçu pour, si et tant que la diode (21) de roue libre est alimentée en courant selon la grandeur (Ud, Um) de mesure affectée,
- ouvrir l'interrupteur (20) à semi-conducteur pendant un temps (T) de blocage donné à l'avance après une instruction d'arrêt codée dans le signal (S) de commande affecté et
- sinon, le fermer indépendamment de la valeur du signal (S) extérieur de commande.

10. Module (14, 14) à semi-conducteur de puissance suivant la revendication 9,
comprenant une séparation (19) de potentiel, qui est montée avant l'entrée (24) de commande du circuit (22) d'attaque.
